**Europäisches Patentamt**

**European Patent Office**

**Office européen des brevets**

(19)

(11) Veröffentlichungsnummer: **0 141 334**
**B1**

(12) # EUROPÄISCHE PATENTSCHRIFT

(45) Veröffentlichungstag der Patentschrift:
26.08.87

(51) Int. Cl.⁴: **B 65 G 23/23**

(21) Anmeldenummer: **84112458.9**

(22) Anmeldetag: **16.10.84**

(54) **Transporteinrichtung nach Art einer Förderbandeinrichtung.**

(30) Priorität: **20.10.83 DE 3338199**

(43) Veröffentlichungstag der Anmeldung:
**15.05.85 Patentblatt 85/20**

(45) Bekanntmachung des Hinweises auf die Patenterteilung:
**26.08.87 Patentblatt 87/35**

(84) Benannte Vertragsstaaten:
**AT BE CH DE FR GB IT LI NL SE**

(56) Entgegenhaltungen:
**DE - A - 539 726**
**DE - A - 2 933 450**
**DE - A - 3 214 811**
**DE - B - 1 183 011**

**ELEKTROTECHNIK UND MASCHINENBAU, 98.
Jahrgang, Heft 11, November 1981, Wien. H. WEH:
"Elektrische Linearantriebe für die Transporttechnik",
Seiten 458-465**

(73) Patentinhaber: **Heidelberg, Götz, Am Hügel 16,
D-8136 Starnberg-Percha (DE)**

(72) Erfinder: **Heidelberg, Götz, Am Hügel 16,
D-8136 Starnberg-Percha (DE)**

(74) Vertreter: **Kador . Klunker . Schmitt-Nilson . Hirsch,
Corneliusstrasse 15, D-8000 München 5 (DE)**

## Beschreibung

Die Erfindung bezieht sich auf eine Transporteinrichtung gemäss Oberbegriff des Anspruchs 1 bzw. des Anspruchs 6.

Eine derartige Transporteinrichtung ist aus der DE-B-1 183 011 bekannt. Bei dieser Transporteinrichtung hängen die Transportbandabschnitte, die im beladenen Zustand einen birnenförmigen Querschnitt haben und zum Entladen reissverschlussartig geöffnet werden können, frei an mittigen Laufkatzen, von denen pro Transportbandabschnitt mindestens eine mit einem rotatorischen, konventionellen Elektromotor als Antriebseinrichtung versehen ist.

Demgegenüber wird durch die Erfindung eine Transporteinrichtung, die gemäss kennzeichnendem Teil des Anspruchs 1 ausgebildet ist, und eine Transporteinrichtung, die gemäss kennzeichnendem Teil des Anspruchs 6 ausgebildet ist, geschaffen.

Es wird ein unerwünscht grosser Durchhang des Transportbands vermieden. Die Transporteinrichtung zeichnet sich durch einfachen Aufbau, dezentralisierte Einleitung der Antriebsleistung und mindestens teilweise Entlastung des Transportbands von Antriebs-Längskräften aus.

Bei der erfindungsgemässen Transporteinrichtung ist das Transportband durch einen angepasst ausgebildeten, elektrischen Linearmotor angetrieben, der die Antriebsleistung in Transportweglängsrichtung über eine Länge verteilt in das Transportband einbringt. Durch die bei der erfindungsgemässen Förderband-Transporteinrichtung mögliche Konzeption des Linearmotors können die Rollkörper mindestens zum Teil, vorzugsweise weitgehend oder sogar nahezu vollständig oder vollständig, von der Aufnahme von Tragkräften, die vom Gewicht des Transportbands oder vom zu transportierenden Gut herrühren, entlastet sein; sie dienen vielmehr in erster Linie der Aufrechterhaltung des Luftspaltabstands des Linearmotors. Das Gewicht des Transportbands und des zu transportierenden Guts kann mindestens teilweise, vorzugsweise überwiegend oder sogar nahezu vollständig oder ganz vollständig, von den anziehend mit dem Wanderfeldstator zusammenwirkenden Dauermagneten getragen werden. Der Wanderfeldstator und die in Reihe angeordneten Dauermagnete bilden eine Einrichtung, die in Kombination sowohl Trag- als auch Vortriebskräfte liefert. Das Transportband kann sich unterhalb der Anordnung aus Wanderfeldstator und Dauermagneten oder auch oberhalb dieser Anordnung befinden, wofür Beispiele weiter unten gegeben werden. Der Luftspaltabstand des Linearmotors muss nicht konstant sein, sondern kann längs der Transporteinrichtung und/oder in Abhängigkeit vom Beladungszustand des Transportbandes veränderlich sein, wofür Beispiele weiter unten gegeben werden.

Bei der erfindungsgemässen Transporteinrichtung bilden die Rollkörper funktionell einen Teil des Linearmotors und bewegen sich mit dem Transportband mit entlang des Transportwegs. Auf diese Weise wird das Transportband während seiner Bewegung in Transportweglängsrichtung nicht, wie es bei herkömmlichen Förderbandeinrichtungen der Fall ist, beim Überlaufen von Rollkörpern deformiert. Vielmehr bleibt die Querschnittsgestalt des Transportbands im wesentlichen erhalten, und man vermeidet Deformationsarbeit im Transportband sowie dadurch induzierte, innere Reibung im Transportgut. Daraus resultiert ein geringerer Energieaufwand. Ausserdem kann man die Transportbandquerschnittsgestalt ohne Rücksichtnahme auf unmittelbare Rollkörperunterstützung wählen, vorzugsweise stark muldenförmig zur Erhöhung der Transportkapazität, was auch Windeinwirkung oder dergleichen auf das Transportgut reduziert.

Bei der Ausbildung gemäss Anspruch 6 können insbesondere dann, wenn das Transportband im beladenen Zustand im Querschnitt eine nach oben konkave, muldenförmige Gestalt hat, die Linearmotoren mit einer derartigen Tragkraftrichtung vorgesehen sein, dass die Tragkraftrichtung am Rand des Transportbands mit dessen Ausrichtung vollständig oder nahezu vollständig zusammenfällt. Dabei können sich Konfigurationen ergeben, bei denen die Tragkraftrichtung der beiden Linearmotoren schräg vom Zentrum des Transportbandes nach oben aussen weisen.

Es ist an sich bekannt, ein Förderband durch einen Linearmotor anzutreiben (DE-A-3 214 811) oder ein Magnetschwebefahrzeug durch einen synchronen Linearmotor mit Dauermagneten anzutreiben (DE-A-2 933 450). Es ist ferner an sich bekannt, bei einem Transportband, das im beladenen Zustand einen birnenförmigen Querschnitt hat und an zugseilgeförderten Laufkatzen hängt, einen Längsrand des Transportbands beim Beladen und Entladen mit Hilfe von daran befestigten Führungsrollen von dem anderen Längsrand fortzuführen und dadurch das Transportband zu öffnen (DE-A-S-39 726 XI/81e); ein den Laufkatzen zugeordneter elektrischer Antrieb ist nicht vorgesehen, erst recht nicht ein Linearmotor mit Dauermagneten.

Vorzugsweise sind die Tragelemente für das Transportband zur Entladung des Transportbands insgesamt oder teilweise schwenkbar. Auf diese Weise kann man das Transportband in einem Entladebereich besonders günstig entladen, ohne am eigentlichen Linearmotor konstruktiven Aufwand treiben zu müssen. Eine besonders einfache, mechanische Lösung zum teilweisen oder vollständigen Schwenken der Tragelemente in einem Entladebereich des Transportwegs besteht darin, dort eine geeignete Anlauffläche vorzusehen, die die gewünschte Schwenkbewegung mechanisch erzwingt.

Eine besonders bevorzugte, konkrete Möglichkeit für die Entladung des Transportbands besteht darin, dass die Tragelemente einen im ungeschwenkten Zustand nach oben konkaven Bereich aufweisen und dass ein Teilbereich nach unten schwenkbar ist, um dem Transportband zum Entladen eine zu einer Längskante nach unten geneigte Lage zu geben. Die beschriebenen Entlademöglichkeiten gestalten sich dann besonders einfach, wenn das Transportband nur im jeweiligen Entladebereich lokal in eine Entladelage gebracht wird, während es davor und dahinter in seiner Normallage läuft. Das Transportband wird hierzu so ausgebildet, dass es den Übergang von der normalen Transportlage in die Entladelage und umgekehrt durchführen kann. Dies ist bei flexiblen Transportbändern, beispielsweise aus Gummi, auf einfachste Weise möglich.

Vorzugsweise ist zwischen dem zum Entladen nach unten zu schwenkenden Teilbereich des jeweiligen Tragelementes und dem restlichen Tragelement eine Klinke vorgesehen und ist im jeweiligen Entladebereich des Transportwegs eine Anlauffläche zum Öffnen der Klinke vorgesehen. Zum Schliessen der jeweiligen Klinke nach dem Entladebereich kann eine entsprechende Anlauffläche, eine Schliessfeder zwischen dem zu schwenkenden Teilbereich des jeweiligen Tragelements und dem restlichen Tragelement oder dgl. dienen.

Es ist bevorzugt, mehrere oder alle Bewegungselemente in Transportweglängsrichtung durch Längsverbinder miteinander zu verbinden, um das Transportband von Vortriebs-Längskräften freizuhalten und einen Synchronlauf der Bewegungselemente ohne Beteiligung des Transportbands, abgesehen von der elektrischen Synchronisation des Linearmotors, sicherzustellen.

Ein kostenmässig besonders günstiger und daher bevorzugter, konstruktiver Aufbau der Transporteinrichtung entsteht dadurch, dass der Transportweg Längs-Profilträger und im Abstand angeordnete Stützen für die Profilträger aufweist, wobei der Wanderfeldstator an den Profilträgern befestigt ist und die Profilträger eine Lauffläche für die Rollkörper darbieten. Die Profilträger, die über eine Länge von mehreren Metern selbsttragend sein können, erfüllen also eine Doppelfunktion. Die aufgeständerte Bauweise ist kostengünstig und benötigt auf dem Erdboden eine nur geringe Fläche.

Die in aller Regel erforderliche Rückführung des Transportbandes geschieht vorzugsweise in der Art, dass der Transportweg übereinander oder nebeneinander zwei Bewegungsbahnen für Hin- und Rückführung des Transportbandes aufweist. Dabei ist sowohl die Bewegungsbahn in Hin-Richtung als auch in Rück-Richtung mit einem Linearmotor ausgestattet. Es ist jedoch auch eine Rückführung des Transportbandes auf einem anderen Weg möglich, beispielsweise insgesamt Dreieckskurs oder dgl.

Es ist ein Charakteristikum des bei der erfindungsgemässen Transporteinrichtung vorgesehenen Linearmotors mit Luftspaltabstandshaltung durch Rollkörper, dass sich bei einem bestimmten Abstand zwischen der Rollkörper-Lauffläche am Transportweg und dem Wanderfeldstator sich eine ganz bestimmte, durch die Dauermagnete gelieferte Tragkraft ergibt. Wenn diese durch Wahl des genannten Abstands auf den beladenen Zustand des Transportbandes derart abgestimmt ist, dass die dafür erforderliche Tragkraft möglichst vollständig durch die Dauermagnete geliefert wird, dann ergibt sich bei der entladenen Rückführung des Transportbandes sozusagen eine zu grosse magnetische Tragkraft, die durch die Rollkörper oder auf andere Weise aufgenommen werden muss. Um in dieser Hinsicht Rollwiderstand und Rollkörperverschleiss zu vermindern, ist in Weiterbildung der Erfindung vorgesehen, dass für die beladene Hinführung und die entladene Rückführung des Transportbandes durch unterschiedlichen Abstand zwischen der Rollkörper-Lauffläche am Transportweg und dem Wanderfeldstator ein unterschiedlicher Luftspaltabstand vorgesehen ist. Dabei wird für die Rückführung des Transportbands günstigerweise ein derartiger grösserer Luftspaltabstand vorgesehen, dass die Dauermagnete möglichst genau die zum Tragen des unbeladenen Transportbands erforderliche Tragkraft liefern.

Eine perfektere, auch auf unterschiedliche Beladungszustände des Transportbands ansprechende Anpassung des Luftspaltabstands an die jeweils erforderliche Tragkraft lässt sich vorzugsweise dadurch erzielen, dass der Abstand zwischen dem Transportband und dem Linearmotor je nach Beladungszustand des Transportbands federnd änderbar ist und dass Übertragungsglieder zum Umsetzen dieser Abstandsänderung in eine Verlagerung der Rollkörper relativ zu den Dauermagneten und damit in eine Änderung des Luftspaltabstands vorgesehen sind. Diese Übertragungsglieder arbeiten vorzugsweise kraftübertragend, beispielsweise mechanisch, hydraulisch oder pneumatisch.

In besonders bevorzugter Ausgestaltung der Erfindung ist vorgesehen, dass die Bewegung des Transportbands oder der Transportbandabschnitte nach dem Selbststeuerungsprinzip gesteuert sind, bei dem der Linearmotorläufer die synchrone Strombeaufschlagung des Linearmotorstators selbst steuert. Für diese Selbststeuerung ist der Wanderfeldstator in mehrere Statorabschnitte unterteilt. Jedem Statorabschnitt ist eine Schalteinrichtung zugeornet, mittels derer die Stromleiter dieses Statorabschnittes an eine Energiezuführeinheit anschaltbar sind. Damit erreicht man, dass nicht alle Stromleiter des die Transportstrecke bildenden Wanderfeldstators gleichzeitig mit Energie versorgt werden müssen, was einerseits zu relativ hohen Leistungsverlusten führen würde und andererseits Bauelemente bedingte, die für sehr hohe Leistung ausgelegt sein müssten. Die Ein- und Ausschaltung der einzelnen Statorabschnitte geschieht mit Hilfe von Sensoreinrichtungen, die längs des Transportweges angeordnet und durch den Linearmotorläufer beeinflussbar sind. Durch diese Sensoreinrichtungen ist eine Informationsweitergabe mindestens über die jeweilige Relativlage von Linearmotorläufer und Linearmotorstator möglich. Durch diese Massnahmen erreicht man, dass der Linearmotorläufer selbst das Ein- und Ausschalten der einzelnen Statorabschnitte steuert. Die Selbststeuerung wirkt sich insbesondere dann besonders vorteilhaft aus, wenn die einzelnen Statorabschnitte kürzer als das Transportband oder die Transportbandabschnitte sind.

Bei einer besonders bevorzugten Ausführungsform der Erfindung ist jedem Statorabschnitt eine eigene Energiezuführeinheit zugeordnet, die mittels der zugehörigen Schalteinrichtung an den betreffenden Statorabschnitt anschaltbar ist und bei Anschaltung an den zugehörigen Statorabschnitt in diesem eine Schubleistung bewirkt, die je nach den lokalen Bedingungen entsprechend einem für das gesamte Transportsystem vorgegebenen Fahrgeschwindigkeitsprofil zu einer Beschleunigung, einem Abbremsen oder einer Beharrungsfahrt führt.

Vorzugsweise ist der Leistungssteuerungseinheit eines jeden Motorelementes ein Speicher zugeordnet, in dem eine der Anzahl vorbestimmter ansteuerbarer Fahrprogramme entsprechende Anzahl verschiedener Fahrgeschwindigkeitssteuersignale speicherbar ist, welche die Energiezuführeinheiten je zur Abgabe einer Leistung an den zugehörigen Statorabschnitt steuern, die zu einer dem gewählten Fahrprogramm entsprechenden ortsspezifischen Geschwindigkeit des Linearmotorläufers führt, die im Bereich von der Fahrgeschwindigkeit Null bis zu einer für den betreffenden Statorabschnitt individuell vorgegebenen, ortsspezifischen Maximalgeschwindigkeit liegt. Dabei können die Speicher der einzelnen Energiezuführeinheiten je an eine gemeinsame Busleitung angeschlossen sein, über welche die jeweils gewünschte Fahrprogrammnummer auf die einzelnen Speicher gegeben wird, die dann in jeder Energiezuführeinheit eine Leistungsabgabe an den zugehörigen Statorabschnitt bewirkt, die zu dem für diese Fahrprogrammnummer für den betrachteten Statorabschnitt vorgegebenen Fahrverhalten führt.

Bei der erfindungsgemässen Transporteinrichtung können in unterschiedlichen Bereichen des Transportweges die Transportbandabschnitte mit unterschiedlicher Geschwindigkeit angetrieben werden, vorzugsweise in Belade- oder Entladebereichen oder bei starken Transportwegkrümmungen langsamer als auf längeren, geraden oder schwach gekrümmten Transportwegbereichen. Dies lässt sich insbesondere mit Linearmotoren nach dem Selbststeuerungsprinzip verwirklichen und bietet die neuartige Möglichkeit, trotz des Arbeitens mit synchronen Linearmotoren unterschiedliche Geschwindigkeiten der Transportbandabschnitte in unterschiedlichen Bereichen des Transportwegs vorzusehen.

Der in der vorliegenden Anmeldung verwendete Begriff «Transportband» bedeutet nicht, dass es sich um ein insgesamt oder im entsprechenden Transportbandabschnitt durchgehendes Transportband handeln muss, obwohl dies der bevorzugte Fall ist. Man kann beispielsweise das Transportband oder die Transportbandabschnitte aus gliederartig zusammenhängenden Einheiten zusammengekoppelten Untereinheiten zusammensetzen und/oder statt des Transportbands eine abgewandelte Transportgutaufnahme vorsehen.

Eine besonders bevorzugte Ausgestaltung der Erfindung besteht darin, dass man Transportbandabschnitte vorsieht, die auf dem grössten Teil des Transportwegs, insbesondere Transportwegbereichen zwischen Belade- und Entladebereichen, mit grösserem gegenseitigem Abstand und relativ hoher Bewegungsgeschwindigkeit verkehren, während die Transportbandabschnitte insbesondere in Belade- und Entladebereichen mit kleinerem oder verschwindendem gegenseitigem Abstand und relativ niedriger, für das Beladen und Entladen geeigneter Bewegungsgeschwindigkeit verkehren. Damit ist nur ein Teil der gesamten Länge des Bewegungswegs der Transportbandabschnitte mit relativ aufwendiger Technik in Gestalt von Transportbandabschnitten belegt, was im Vergleich zu herkömmlichen Förderbandeinrichtungen eine Verminderung der erforderlichen Investitionskosten bei mindestens gleichbleibender Transportleistung ermöglicht.

Die Erfindung und Weiterbildungen der Erfindung werden im folgenden anhand von teilweise schematisch dargestellten Ausführungsbeispielen noch näher erläutert.

Fig. 1 einen Querschnitt einer ersten Ausführungsform der Transporteinrichtung;

Fig. 2 eine Seitenansicht der Transporteinrichtung von Fig. 1;

Fig. 3 einen Querschnitt eines Teils der Transporteinrichtung von Fig. 1 Entladungszustand;

Fig. 4 schematisch einen Querschnitt einer zweiten Ausführungsform der Transporteinrichtung;

Fig. 5 bis 9, jeweils im Querschnitt, mehrere weitere Möglichkeiten die Gestaltung der Längs-Profilträger und der lagemässigen Anordnung der Rollkörper und des Wanderfeldstators;

Fig. 10 eine schematische Seitenansicht einer dritten Ausführungsform der Transporteinrichtung mit lastabhängiger Veränderung des Luftspaltabstands;

Fig. 11 einen Querschnitt eines Teils einer vierten Ausführungsform der Transporteinrichtung mit lastabhängiger Veränderung des Luftspaltabstands;

Fig. 12 schematisch in Draufsicht eine Möglichkeit zur Ausbildung einer Weiche des Transportwegs;

Fig. 13 in Form eines elektrischen Blockschaltschemas eine Ausführungsform der Transporteinrichtung mit Selbststeuerung;

Fig. 14 schematisch ein durch Fahrprogrammnummern beeinflussbares Fahrprofil der selbstgesteuerten Transporteinrichtung;

Fig. 15 eine schematische Seitenansicht einer Transporteinrichtung mit in Transportbandabschnitte unterteiltem Transportband.

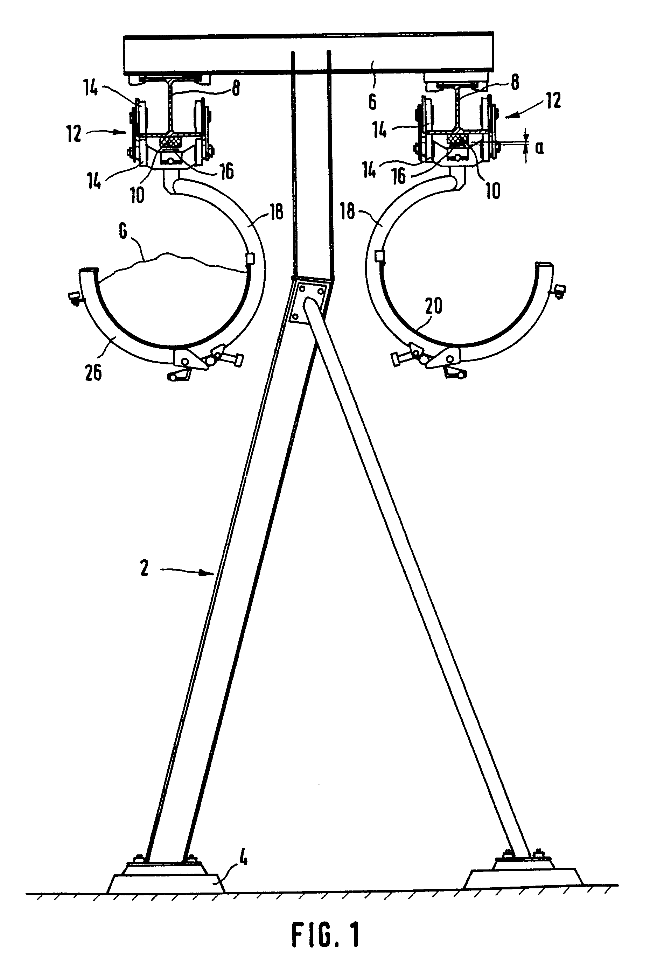

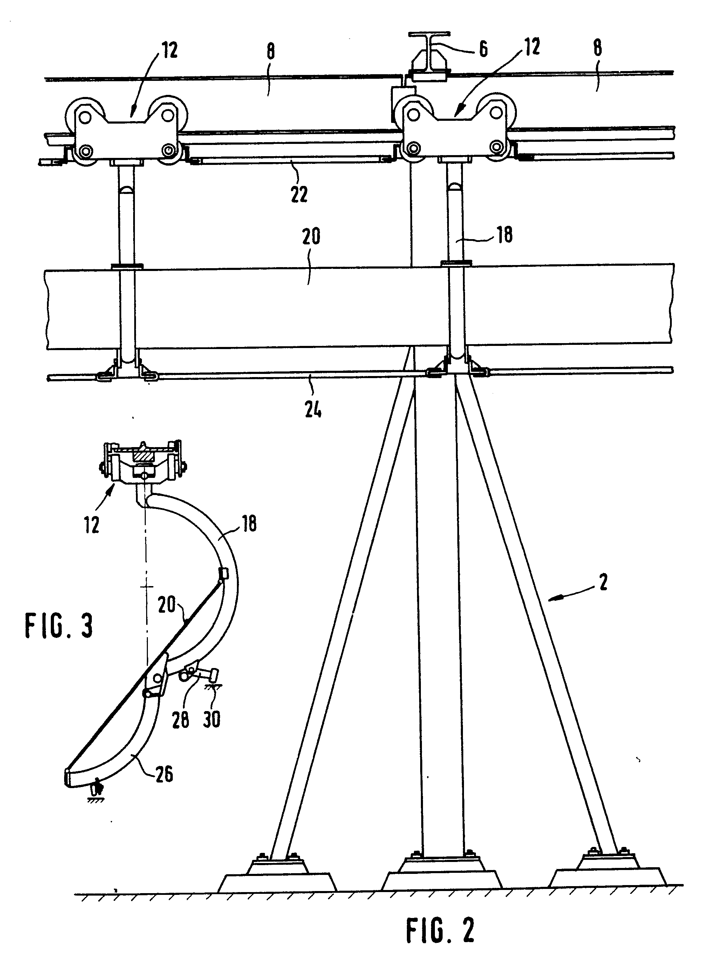

In den Figuren 1 und 2 erkennt man eine dreibeinige Stütze 2, die unten auf Fundamentblöcken 4 mit dem Erdboden verankert ist und die oben einen Querträger 6 in Form einer I-Profils trägt. Längs des Transportwegs sind eine Vielzahl derartiger Stützen 2 im gegenseitigen Abstand von 5 bis 30 m, je nach konstruktiver Auslegung der Transporteinrichtung und je nach Gewicht des pro Längeneinheit Transportweg zu transportierenden Guts, vorgesehen. Der Querträger 6 erstreckt sich beidseits der Stütze 2. An der Unterseite des Querträgers 6 ist in seinen beiden Endbereichen jeweils ein Längsträger 8 in Form eines I-Profils befestigt. Die Längsträger 8 erstrecken sich von Stütze 2 zu Stütze 2 in der angebenen Länge.

An der Unterseite jedes Längsträgers 8 ist ein Wanderfeldstator 10 befestigt. Der Wanderfeldstator 10 besteht aus einem in Längsrichtung lamellierten Blechpaket und weist an der Unterseite eine Reihe von nicht-gezeichneten, in gleichmässigem Abstand angeordneten, quer zur Transportweglängsrichtung verlaufenden Nuten auf. In diese Nuten ist eine beispielsweise dreiphasige Wanderfeldwicklung mäanderförmig eingelegt.

In den Figuren 1 und 2 erkennt man ferner Bewegungselemente in Form von Laufkatzen 12. An jeder der Laufkatzen sind acht Rollkörper in Form von Rädern 14, drehbar gelagert, und zwar derart, dass sich vier Räder unterhalb des unteren Flansches des Längsträgers 8 und vier Räder oberhalb des unteren Flansches des Längsträgers 8 befinden, wobei die Anordnung zum senkrechten Flansch des Längsträgers 8 und von der Seite der Laufkatze 12 aus betrachtet symmetrisch ist. Die oberen Räder 14 können auf der Oberseite des unteren Flansches des Längsträgers 8 ablaufen, und die unteren Räder 14 können an der Unterseite des unteren Flansches des Längsträgers 8 ablaufen. Der Spalt zwischen dem Umfang der unteren Räder 14 und dem Umfang der oberen Räder 14 ist etwas grösser als die Dicke des unteren Flansches des Längsträgers 8. Die oberen und/oder die unteren Räder 14 sind mit Radkränzen zur Seitenführung versehen.

Jede Laufkatze 12 ist mit einer sich in Transportrichtung erstreckenden Reihe von Dauermagneten 16 versehen derart, dass die Dauermagnetreihe unterhalb des Wanderfeldstators 10 diesem mit einem Luftspaltabstand a gegenüberliegt. Die Dauermagnete 16 haben in Transportweg-Längsrichtung abwechselnde Polung und eine Abstandsteilung, die der dreifachen Teilung der Anordnung der Nuten im Wanderfeldstator 10 entspricht. Auf diese Weise ist durch den Wanderfeldstator 10 und die Reihe der Dauermagnete 16 ein synchroner Linearmotor gebildet. Dieser Linearmotor liefert sowohl Vortriebskräfte als auch senkrecht nach oben gerichtete Tragkräfte, wobei durch das Zusammenwirken der Räder 14 mit dem Längsträger 8 eine Beibehaltung des Luftspaltabstands a erreicht wird. Wenn das von der Laufkatze 12 zu tragende Gewicht grösser als die magnetische Tragkraft ist, liefern die oberen Räder 14 den erforderlichen Tragkraftrest. Wenn das von der Laufkratze 12 zu tragende Gewicht kleiner als die magnetische Tragkraft ist, wird durch Abrollen der unteren Räder 14 am Längsträger 8 dafür gesorgt, dass die Dauermagnete 16 nicht in körperlichen Kontakt mit dem Wanderfeldstator 10 kommen.

An jeder Laufkatze 12 hängt um eine in Transportweglängsrichtung liegende Achse schwenkbar ein Tragelement 18, das im wesentlichen die Form eines dreiviertelkreisförmigen Bügels hat, dessen «offenes Viertel» nach schräg oben von der Stütze 2 fortweist. Die Laufkatzen 12 haben einen gegenseitigen Abstand von ein bis zehn m je nach Gewicht und Menge des transportierenden Guts. Ein Transportband 20 aus entsprechend dickem, gegebenenfalls armiertem, Gummi ist in den unteren, halbkreisförmigen Bereich der Bügel 18 eingelegt und rechts und links an den Bügeln 18 befestigt.

Das Transportband 20 erstreckt sich von Bügel 18 zu Bügel 18 über eine Teillänge des gesamten Transportweges.

Die einzelnen Laufkatzen 12 sind durch Längsverbinder in Gestalt von an den Laufkatzen 12 angelenkten Stangen 22 miteinander verbunden. Unterhalb des Transportbands 20 sind die einzelnen Bügel 18 durch Transportbandstraffungs-Längsverbinder in Form von an den Bügeln angelenkten Stangen 24 miteinander verbunden, um die Bügel 18 von Biegekräften zu entlasten. Die Stangen 22 und 24 können entweder eine Teilanzahl der Bügel 18 miteinander verbinden, so dass separate Transportbandabschnitte entstehen, oder sämtliche Bügel 18 der gesamten Transporteinrichtung.

Zum Entladen des Transportbands 20 werden in einem Entladebereich jeweils Teilbereiche 26 der Bügel 18 um eine in Transportweglängsrichtung liegende Achse nach unten geschwenkt (vergleiche Fig. 3). Diese Teilbereiche 26 sind jeweils das dem freien Ende des Bügels 18 benachbarte Viertel des jeweiligen Bügels 18. Beim Abklappen des jeweiligen Teilbereichs 26 nach unten wird die daran befestigte Längskante des Transportbandes 20 nach unten mitgenommen, so dass das Transportband 20 beim Entladen im wesentlichen die Gestalt einer nach aussenunten geneigten Schrägfläche einnimmt. Das transportierte Gut G rutscht infolgedessen im Entladebereich nach aussen-unten aus der Transporteinrichtung, wobei das Entladen noch durch mechanische Abstreifer unterstützt werden kann und/oder eine Reinigung beispielsweise durch Absprühen mit Wasser erfolgen kann.

Jeder Teilbereich ist mit dem restlichen Bügel 18, der die Gestalt eines aufrechtstehenden Halbkreises hat, durch eine Klinke 28 im nach oben geklappten Zustand verriegelt. Im jeweiligen Entladebereich ist eine Anlauffläche 30 vorgesehen, die die darüberfahrenden Klinken 28 anhebt, wodurch die Verriegelung gelöst und der jeweilige Teilbereich 26 unter der Wirkung der Schwerkraft und/oder des Gewichts des Transportsguts G nach unten abklapt. Nach dem Entladevorgang wird der jeweilige Teilbereich 26 durch eine auf ihn wirkende, weitere Anlauffläche (nicht gezeichnet) oder durch Federkraft oder dergleichen angehoben, so dass er wieder die eingeklinkte Normalstellung einnimmt.

In Fig. 1 bilden die an den linken Enden der Querträger 6 befestigten Längsträger 8 eine Hin-Führung des Transportbandes 20 für den üblicherweise beladen zurückzulegenden Transportweg, während die an den rechten Enden der Querträger 6 befestigten Längsträger eine Rück-Führung des Transportbandes 20, üblicherweise im unbeladenen Zustand, bilden. Man kann auf der Rück-Führung die Unterseite des Wanderfeldstators 10 höher vorsehen als auf der Hin-Führung, so dass ein grösserer Luftspaltabstand a entsteht, um der dort geringeren erforderlichen Tragkraft des Linearmotors Rechnung zu tragen. Diese Möglichkeit ist in den Figuren 1 bis 3 nicht eingezeichnet. Es versteht sich, dass Hin- und Rückführung durch entsprechende Bögen am Ende des Transportweges miteinander verbunden sind.

Mam kann auch vorsehen, dass die Teilbereiche 26 der Bügel 18 im Normalzustand nicht starr mit dem restlichen Bügel 18 verriegelt sind sondern noch stärker nach innen schwenken können. Auf diese Weise kann das Transportband 20 in Kurven des Transportwegs eine oben stärker als halbkreisförmig zusammengedrückte Gestalt annehmen.

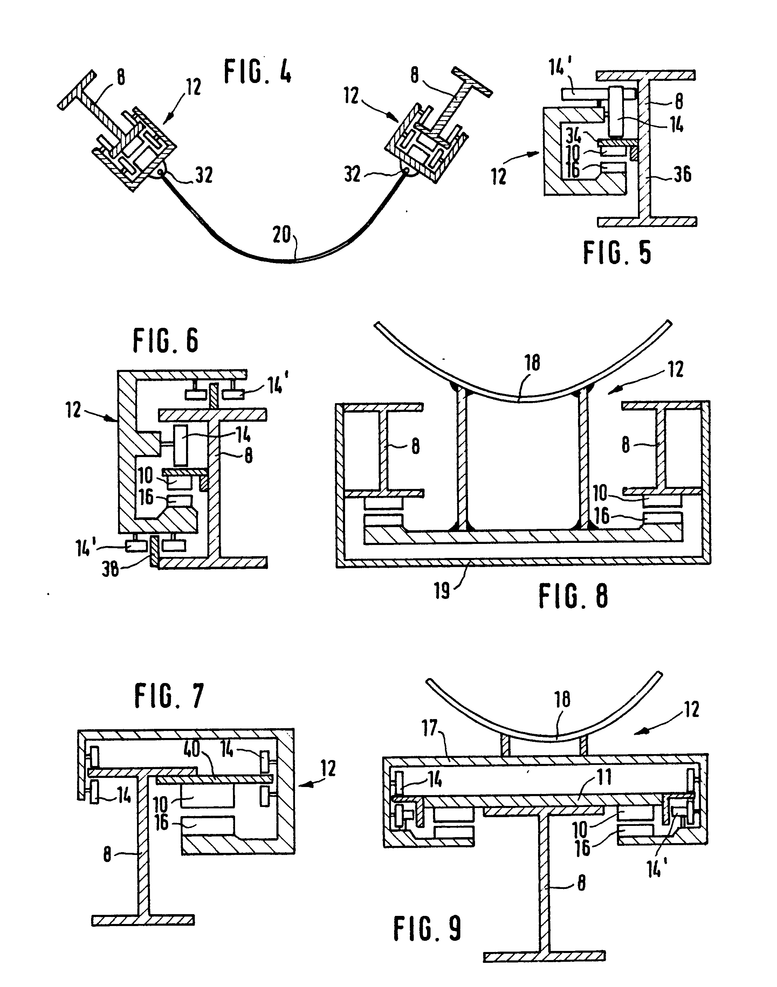

Fig. 4 zeigt eine Transporteinrichtung ohne gesonderte Tragelemente für das Transportband 20. Hier sind lediglich die beiden in Transportweglängsrichtung verlaufenden Ränder 32 an Laufkatzen 12 befestigt, und zwar pro Längsrand 32 eigene Laufkatzen 12. Die Längsträger 8 und die Laufkatzen 12 sind schräg nach unten-innen gestellt, so dass sich eine nach oben offene, konkave, etwa parabelförmige Gestalt des Transportbands 20 im Querschnitt und eine Fortsetzung dieser Gestalt in der Ausrichtung der Längsträger 8 ergibt, wodurch die Laufkatzen 12 im wesentlichen von Querkräften entlastet werden. Wie auch beim Ausführungsbeispiel gemäss Figuren 1 bis 3 können die Laufkatzen 12 durch Längsverbinder miteinander verbunden sein, müssen es aber nicht. ·

Bei der Ausführungsform gemäss Fig. 5 besitzt der Längsträger 8 I-Profil mit einem etwa mittig und nach aussen weisend angeschweissten Mittelflansch 34. Der Wanderfeldstator 10 ist unten an dem Mittelflansch 34 befestigt. Spurkranzlose Räder 14 mit waagerechter Achse befinden sich im Raum zwischen dem oberen Flansch und dem Mittelflansch 34 des Längsträgers 8 und können dadurch sowohl oben als auch unten anlaufen. Die Seitenführung übernehmen Seitenführungsräder 14', die am Vertikalflansch 36 des Längsträgers 8 ablaufen.

Die Ausführungsform gemäss Fig. 6 unterscheidet sich von der Ausführungsform gemäss Fig. 5 dadurch, dass der Vertikalflansch 36 des Längsträgers 8 nach oben verlängert ist und dass der untere Flansch des Längsträgers 8 an einem Ende einen nach oben weisenden Fortsatz 38 aufweist. Paare von Seitenführungsrädern 14 wirken mit der Verlängerung des Vertikalflanschs 36 und dem Fortsatz 38 zusammen.

Bei der Ausführungsform gemäss Fig. 7 ist der obere Horizontalflansch des Längsträgers 8 einseitig durch eine angeschweisste Platte 40 verlängert. Die Platte 40 trägt an ihrer Unterseite den Wanderfeldstator 10. Obere Räder 14 können auf der Oberseite des oberen Horizontalflansches und auf der Oberseite der Platte 40 abrollen, während untere Räder 14 an der Unterseite des oberen Horizontalflanschs und an der Unterseite der Platte 40 abrollen können. Die Seitenführung erfolgt durch nicht eingezeichnete Seitenführungsräder oder Spurkränze mindestens an einem Teil der Räder 14.

Bei der Ausführungsform gemäss Fig. 8 sind statt eines Längsträgers 8 zwei Längsträger 8 mit I-Profil vorgesehen, die über unten liegende, beabstandete, U-förmige Querverbinder 19 miteinander verbunden sind. Unterhalb jedes Längsträgers 8 ist ein Wanderfeldstator 10 befestigt. Nicht eingezeichnete Räder 14 mit horizontaler Achse und gegebenenfalls zusätzlich Seitenführungsräder 14' rollen in den nach innen weisenden Räumen, die die Gestalt eines liegenden U haben, der Längsträger 8 ab. Die so gebildete Laufkatze 12 trägt oben ein Tragelement 18, das seinerseits eine Transportgutaufnahme trägt.

Bei der Ausführungsform gemäss Fig. 9 hat der Längsträger 8 ein I-Profil, auf dessen oberem Flansch beabstandete Querträger 11 befestigt sind, an deren überkragenden Enden links und rechts jeweils ein längsverlaufendes Winkelprofil angebracht ist, dessen offene Seite nach aussen-unten weist. Auf den Horizontalschenkeln der Winkelprofile laufen Räder 14 oben und unten ab, während Seitenführungsräder auf beiden Seiten von aussen an den Vertikalschenkeln ablaufen. Zwei Wanderfeldstatoren 10 sind rechts und links unter den überkragenden Enden der Querträger 11 befestigt. Die gesamte Anordnung ist symmetrisch zu einer vertikalen Mittelebene, wobei die Räder und Dauermagnete 16 der linken Seite mit den Rädern und Dauermagneten 16 der rechten Seite über einen Bügel 17 verbunden sind, der im wesentlichen die Gestalt eines den Längsträger 8 übergreifenden, unten offenen U hat und auf seiner Oberseite ein konkaves, oben offenes Tragelement 18 trägt. Das nicht gezeichnete Transportband ist in die Tragelemente 18 einer Reihe der beschriebenen, beabstandeten Laufkatzen 12 eingelegt.

Bei allen Ausführungsformen bestehen die Räder 14 und/oder die Seitenführungsräder 14' aus Kunststoff, was wartungsarm und aufgrund der relativ geringen Radbelastung durchführbar ist.

Bei den Ausführungsformen gemäss Fig. 5 bis 9 kann das Transportband entweder hängend an den Laufkatzen 12 oder auch stehend auf diesen angeordnet sein. Dabei ist vorzugsweise dafür gesorgt, dass — im Querschnitt betrachtet — der Schwerpunkt des beladenen Transportbands in Vertikalrichtung im wesentlichen oberhalb oder unterhalb des Linearmotors ist bzw. der in Vertikalrichtung wirkenden Räder 14 ist, um möglichst geringe Kippmomente um eine in Transportweglängsrichtung liegende Achse aufnehmen zu müssen. Bei hängender Anordnung des Transportbands ist eine gelenkige Aufhängung um eine in Transportweglängsrichtung befindliche Achse in diesem Zusammenhang vorteilhaft.

Es versteht sich, dass bei allen Ausführungsformen gemäss Fig. 4 bis 9 die Laufkatzen 12 eine Reihe von Dauermagneten 16 in dem Wanderfeldstator 10 gegenüberliegender Lage aufweisen.

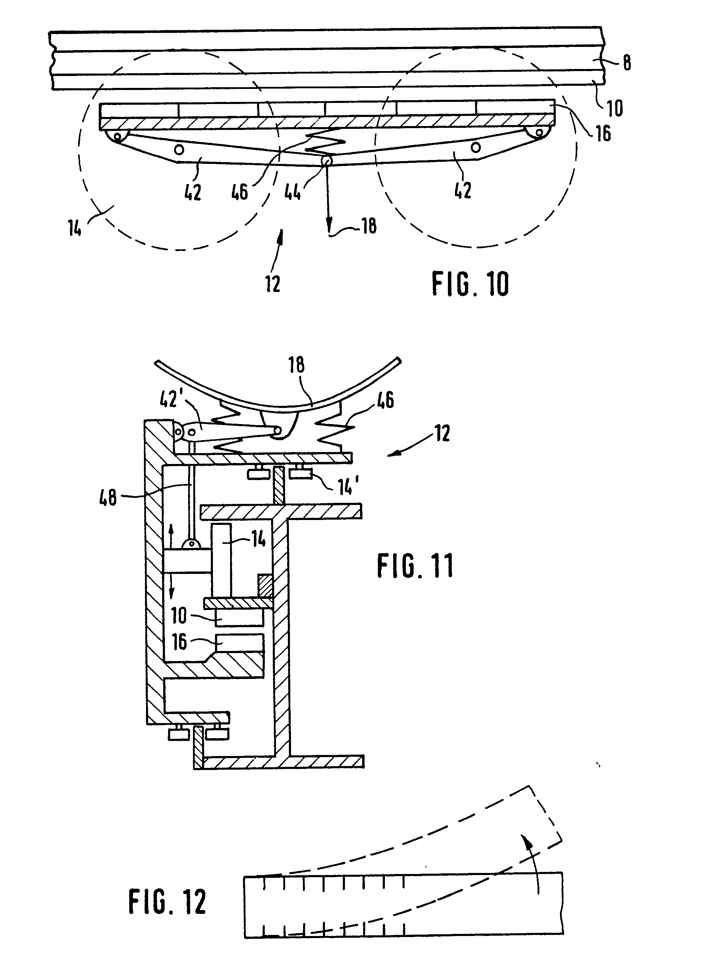

Fig. 10 und 11 zeigen zwei Möglichkeiten zur mechanischen Anpassung des Laufspaltabstands a an den Beladungszustand des Transportbands 20. Bei der Ausführungsform gemäss Fig. 9 sind untere Räder 14 nicht starr an der Laufkatze 12 befestigt. Vielmehr führt vom vorderen Ende der Laufkatze 12 ein schwenkbar angeordneter Hebel 42 nach hinten und vom hinteren Ende der Laufkatze 12 ein schwenkbarer Hebel 42 nach vorn. Die beiden Hebel 42 sind an ihren freien Enden miteinander verbunden. Zwischen diesem Verbindungsbereich 44 und dem Laufkatzenkörper ist eine Zug-Spiralfeder 46 angeordnet. An jedem der Hebel 42 ist ein Paar von Rädern 14 drehbar gelagert, und zwar jeweils näher an der Anlenkstelle des Hebels 42 als an der Verbindungsstelle 44. Das Transportband 20 ist mittels eines nicht gezeichneten Tragelements an der Verbindungsstelle 44 angehängt. Wenn nun das Transportband 20 mit Gut G beladen wird, wird die Feder 46 gedehnt. Dadurch werden die beschriebenen Räder 14 relativ zur restlichen Laufkatze 12 nach unten gezogen. Da die Räder 14 von unten her an geeigneten Bereichen der Längsträger 8 ablaufen, ergibt sich dadurch eine Bewegung der Laufkatze relativ zum Längsträger 8 nach oben und somit eine Verringerung des Luftspaltabstands a. Infolgedessen liefert der Linearmotor eine grössere magnetische Tragkraft in Vertikalrichtung.

Die Ausführungsform gemäss Fig. 10 entspricht von der Gestaltung des Längsträgers 8 und von der Geometrie der Anordnung des Linearmotors und der Räder 14 bzw. 14' her im wesentlichen der Ausführungsform gemäss Fig. 6. Oben auf der Laufkatze ist unter Zwischenschaltung von Druck-Spiralfedern 46 ein etwa halbkreisförmiges, nach oben offenes Tragelement 18 angebracht. In dem Tragelement 18 liegt das nicht eingezeichnete Transportband. Das in Vertikalrichtung wirkende Rad 14 ist an der Laufkatze 12 relativ zu dieser vertikal verschiebbar gelagert. An der Laufkatze 12 ist ein sich im wesentlichen horizontal erstreckender Hebel 42' angelenkt. Das freie Ende des Hebels 42', der sich quer zur Transportweglängsrichtung erstreckt, ist am Tragelement 18 angelenkt. Von dem Hebel 42' erstreckt sich, angelenkt näher an der Anlenkstelle zur Laufkatze 12 als an der Anlenkstelle zum Tragelement 18, im wesentlichen vertikal eine Verbindungsstange 48 zur vertikal relativ zur Laufkatze 12 verschiebbaren Achse des Rades 14. Wenn nun das Transportband mit Transportgut G beladen wird, werden die Federn 46 zusammengedrückt. Infolgedessen senkt sich der Hebel 42' schwenkend um die Anlenkstelle zur Laufkatze 12. Dadurch senkt sich auch die Verbindungsstange 48 und bewegt das Rad 14 relativ zur Laufkatze nach unten. Daraus resultiert eine Anhebung der Laufkatze 12 mit der daran starr befestigten Dauermagnetreihe relativ zum Längsträger 8. Daraus resultiert eine Verkleinerung des Luftspaltabstands a und eine beabsichtigte Erhöhung der durch den Linearmotor gelieferten Tragkraft.

Es sei noch ergänzt, dass man bei der Ausführungsform gemäss Fig. 4 den Abstand der beiden Längsträger 8 und zugleich sinnvollerweise auch deren Winkelausrichtung längs des Transportweges unterschiedlich machen kann. So ist es zum Beispiel möglich, in einem Entladebereich den Abstand der beiden Längsträger 8 und deren Wirkelausrichtung so zu gestalten, dass das Transportband 20 im Querschnitt im wesentlichen horizontal bzw. nur mit einem leichten Durchhang gespannt ist, wodurch eine besonders bequeme Entladung möglich ist, beispielsweise durch Umlenkung des Transportbands um etwa 180° ähnlich wie bei herkömmlichen Förderbandeinrichtungen. Die nahezu waagerechte oder nur leicht durchhängende Gestalt des Transportbands 20 im Querschnitt kann auch durch Unterstützung mittels Rollen, Walzen oder dergleichen, hauptsächlich in Transportbandmitte, unterstützt werden. Ferner ist es möglich, das Transportband 20 in der beschriebenen, gestrafften Gestalt zum Ausgangspunkt des Transportweges zurückzuführen, wodurch in der Höhe Platz gespart wird und beispielsweise bei der Ausführungsform gemäss Fig. 4 die Rückführung des Transportbands 20 platzsparend oberhalb oder unterhalb der Hinführung vorgesehen werden kann. Es gilt generell, dass die Rückführung des Transportbands 20 nicht nur neben sondern auch oberhalb oder unterhalb der Hinführung stattfinden kann.

Bei den Ausführungsformen gemäss Fig. 5 bis 7 kann die gezeichnete Anordnung aus Längsträger 8, Laufkatze 12 mit Rädern 14 bzw. 14', Wanderfeldstator 10 und Reihe von Dauermagneten 16 entweder im Querschnitt betrachtet nur einfach oder symmetrisch ergänzt doppelt vorgesehen sein. Im erstgenannten Fall geht die Verbindung zum hängend oder stehend vorgesehenen Transportband, im Querschnitt betrachtet, seitlich neben dem einen Längsträger 8 nach oben oder nach unten. Im zweitgenannten Fall geht die Verbindung zum hängend oder stehend vorgesehenen Transportband üblicherweise zwischen den beiden Längsträgern 8 nach oben oder nach unten. Bei paariger Anordnung der Längsträger 8 sind die linken und die rechten Laufkatzen 12 entweder mechanisch quer miteinander verbunden oder nicht. Für paarige Anordnung der Längsträger 8 eignet sich insbesondere auch die Ausführungsform gemäss Fig. 5.

Vorzugsweise ist nicht der gesamte Transportweg (Hin- und Rückweg) mit einem kontinuierlich durchgehenden Wanderfeldstator 10 belegt, sondern es sind in Längsrichtung verteilt mehrere Wanderfeldstatorabschnitte vorgesehen. Die Wanderfeldstatorabschnitte sind vorzugsweise wesentlich kürzer als die Transportbandabschnitte, wenn das gesamte Transportband in gesonderte Transportbandabschnitte unterteilt ist. Von einer im Fahrweg angebrachten Stromversorgungseinheit gespeiste und gesteuerte Linearmotoreinheiten, welche kürzer als Transportbandabschnitte sind, seien als Linearmotorelemente bezeichnet. Die Steuerung eines solchen Elements erfolgt vorzugsweise so, dass ein in den Bereich des jeweiligen Motorelements einfahrender Transportbandabschnitt, durch einen oder mehrere ortsfest am Linearmotorabschnitt angebrachte Sensoren erfasst, das jeweilige Motorelement ein- bzw. ausschaltet und mit der Dauermagnetpolgeschwindigkeit des Transportbandabschnitts synchronisiert. Durch die Unterteilung in Linearmotorelemente ist in jedem Motorelement nur noch eine kleinere, installierte bzw. aufzubringende Leistung notwendig, die in Form von Frequenzumrichtern mit Steuerung, Stromversorgung usw. in grosser Stückzahl und damit fabrikatorisch nicht zu teuer auftritt. In der Steuerung jedes Motorelements können mehrere Transportgeschwindigkeiten gespeichert sein, die zentral oder durch Beeinflussung von Transportbandabschnitten her wahlweise abgerufen werden können. Auf diese Weise lässt sich die weiter vorn geschilderte Möglichkeit der unterschiedlichen Geschwindigkeit und des unterschiedlichen Abstands der Transportbandabschnitte vergleichsweise einfach realisieren. Insbesondere ist es möglich, die Transportbandabschnitte in bestimmten Bereichen, beispielsweise auf freier Transportwegstrecke ohne enge Krümmungen, schneller und in bestimmten anderen Bereichen, beispielsweise in Beladebereichen, Entladebereichen, Transportwegsstücken mit engeren Krümmungen, langsamer fahren zu lassen. Die Motorelemente sind vorzugsweise kürzer als die Transportbandabschnitte, beispielsweise einige m lang im Vergleich zu einer Transportbandabschnittlänge von einigen 100 m.

Fig. 12 veranschaulicht schematisch eine Weichenkonstruktion für den Fall von Längsträgern 8 mit I-Profil. Hierbei sind sowohl der obere Flansch als auch der untere Flansch des Längsträgers 8 von der Seite her mit beispielsweise eingesägten, quer verlaufenden Einschnitten versehen. Dadurch erhält der Längsträger 8 genügend Elastizität in Querrichtung, damit er bei entsprechender Läge elastisch an seinem einen Ende um die erforderliche Strecke in Querrichtung gebogen werden kann, um den Anschluss an einen abzweigenden Längsträger herzustellen.

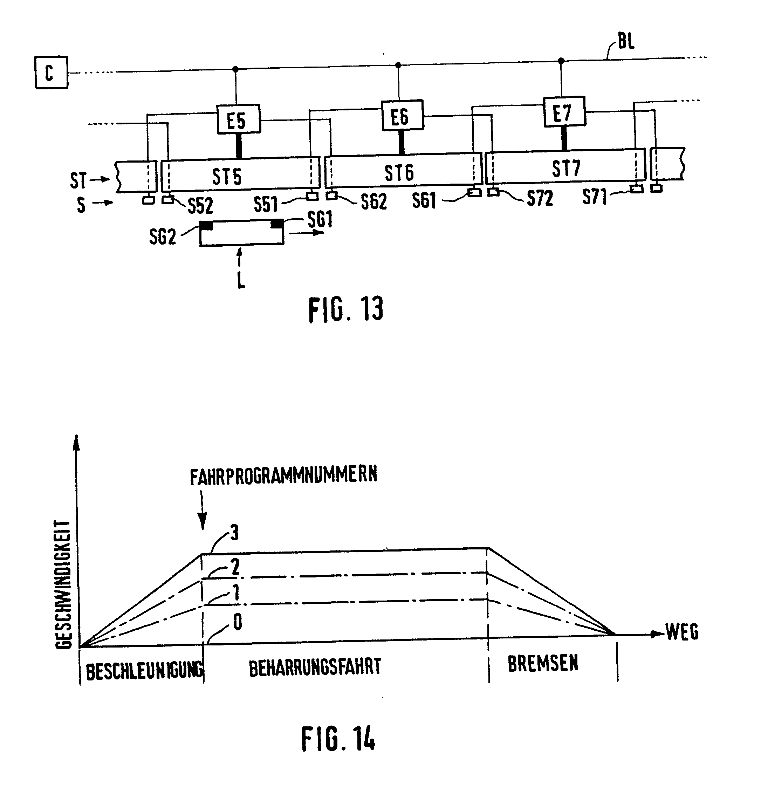

Fig. 13 zeigt in Form eines elektrischen Blockschaltschemas eine Ausführungsform der Transporteinrichtung mit Selbststeuerung. Der Wanderfeldstator ST ist in eine Vielzahl Statorabschnitte ST unterteilt, von denen in Fig. 13 nur drei Statorabschnitte ST5, ST6 und ST7 vollständig dargestellt sind. Jedem dieser Statorabschnitte ist eine Energieführeinheit E5, E6 bzw. E7 zugeordnet, zu der eine Schalteinrichtung gehört, mittels welcher die von der jeweiligen Energiezuführeinheit bereitgestellte Leistung an den zugehörigen Statorabschnitt anschaltbar ist. Entlang des Stators ST sind Sonden S angeordnet, die auf Signalgeber SG1 und SG2 am Linearmotorläufer L reagieren. Bei der in Fig. 13 dargestellten Ausführungsform sind jedem Statorabschnitt zwei Sonden S51, S52 bzw. S61, S62 bzw. S71, S72 zugeordnet, von denen sich die eine im vorderen und die andere im hinteren Endbereich des jeweiligen Statorabsschnittes befindet. Gelangt beispielsweise bei der in Fig. 13 dargestellten Relativposition zwischen Linearmotorläufer L und Linearmotorstator ST der in Fahrtrichtung vorne liegende Signalgeber SG1 in den Sensorbereich des Sensors S51, bewirkt dies ein Anschalten der von der Energiezuführeinheit E6 bereitgestellten Fahrleistung an den Statorabschnitt ST6. Wenn dann der in Fahrtrichtung hinten liegende Signalgeber SG2 des Linearmotorläufers L in den Sensorbereich des Sensors S62 gelangt, wird die Energiezuführeinheit E5 von dem Statorabschnitt ST5 abgeschaltet.

Als Signalgeber SG1 und SG2 können entweder die für den Linearmotorläufer vorzugsweise verwendeten Permanentmagneten selbst oder an dem Linearmotorläufer L zusätzlich angeordnete Signalgebermagnete verwendet werden. Für die Sonden S entlang des Stators ST verwendet man dann vorzugsweise Hall-Sonden.

Zum Erhalt eines gewünschten Fahrprofils, wie es in Fig. 14 gezeigt ist, kann man entweder die einzelnen Energiezuführeinheiten für eine Maximalleistung auslegen, die dem lokalen Leistungsbedarf entsprechend dem Fahrprofil entspricht. Man kann aber auch lauter hinsichtlich der maximalen Leistungsabgabe identische Energiezuführeinheiten verwenden und die von den einzelnen Energiezuführeinheiten versorgten Statorabschnitte je nach der lokalen Leistungsanforderung unterschiedlich lang machen.

Das Fahrprofil kann man mit Hilfe einer Fahrprogrammnummernsteuerung auf technisch recht einfache Weise variabel machen. Zu diesem Zweck ist bei der in Fig. 13 gezeigten Ausführungsform jeder Energiezuführeinheit ein Speicher zugeordnet, in dem eine der Anzahl vorbestimmter ansteuerbarer Fahrprogramme entsprechende Anzahl verschiedener Fahrgeschwindigkeitssteuersignale speicherbar ist. Die Speicher sind über eine gemeinsame Busleitung BL mit einer Steuerstelle C verbunden, von der den Speichern in den einzelnen Energiezuführungseinheiten die einem jeweils gewünschten Fahrprofil entsprechenden Fahrprogrammnummern vorgegeben werden. Jede Energiezuführeinheit kann dann an den zugehörigen Statorabschnitt eine der jeweils gewählten Fahrprogrammnummer entsprechende lokale Fahrleistung abgeben. Die einer bestimmten Fahrprogrammnummer entsprechende Fahrleistung kann dabei für verschiedene Statorabschnitte unterschiedlich sein. Auf diese Weise ist es ausreichend, von der Steuerstelle C jeweils nur eine einzige Fahrprogrammnummer auf die Busleitung BL zu geben, der dann in den einzelnen Energiezuführeinheiten die ortsspezifisch individuelle Fahrleistung für das jeweils gewählte Fahrprofil zugeordnet wird. Die Steuerstelle C kann sämtlichen Statorabschnitten der Transporteinrichtung zugeordnet sein oder nur einem Teil der Statorabschnitte, wobei dann weitere Gruppen von Statorabschnitten je durch eine weitere Steuerstelle gesteuert werden.

Bei dem in Fig. 14 dargestellten Fahrprofilbeispiel folgt auf eine Beschleunigungsstrecke eine Beharrungsfahrtstrecke und wird die Fahrt nach Durchlaufen einer Bremsstrecke beendet. Mittels vier Fahrprogrammnummern können vier Geschwindigkeitsprofile 0 (Stehen) bis 3 (maximale Geschwindigkeit) gewählt werden. In der Praxis werden andersartige und kompliziertere Fahrprofile erforderlich sein. Beispielsweise werden Zwischenbeschleunigungen und Zwischenabbremsungen dort, wo es bergauf bzw. bergab oder um Kurven geht, erforderlich sein und bei einer erfindungsgemässen Transporteinrichung nach Art einer Förderbandeinrichtung werden ausser bei Wahl des Fahrprogramms 0 in den Be- und Entladungszonen nur von 0 verschiedene verminderte Geschwindigkeiten auftreten.

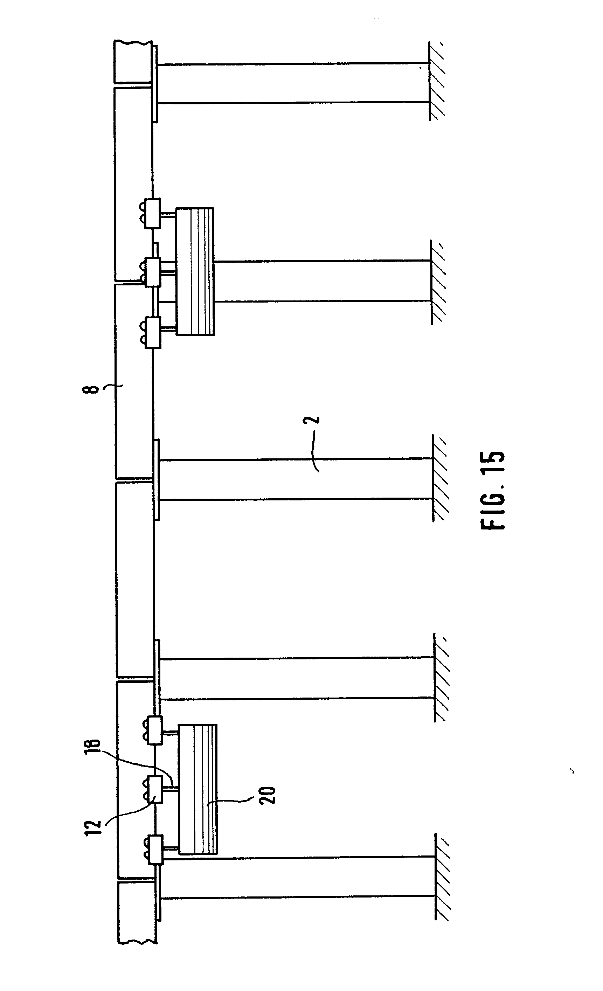

In Fig. 15 ist die Möglichkeit veranschaulicht, das Transportband in mehrere Transportbandabschnitte 20' zu unterteilen, die den Transportweg mit gegenseitigem Abstand in Fahrtrichtung befahren. Insgesamt ist die Konstruktion analog zu der in Fig. 2 mehr im einzelnen gezeigten Transporteinrichtung.

**Patentansprüche**

1. Transporteinrichtung nach Art einer Förderbandeinrichtung zum Transportieren von Gut (G) längs eines Transportwegs, mit
— mehreren einzelnen Transportbandabschnitten (20), auf die das Gut (G) auflagerbar ist;
— laufkatzenartigen, mit Rollkörpern (14) ausgestatteten Bewegungselementen (12), die in Transportweglängsrichtung voneinander beabstandet sind und die Transportbandabschnitte (20) jeweils an beabstandeten Stellen tragen; und
— elektronischen Antriebseinrichtungen zum Antreiben der Bewegungselemente (12) längs des Transportwegs, dadurch gekennzeichnet, dass an den Bewegungselementen (12) befestigte, in Transportweglängsrichtung beabstandete Tragelemente (18) vorgesehen sind, die die Transportbandabschnitte (20) abstützen; dass zwischen den einem Transportbandabschnitt (20) zugeordneten Tragelementen (18) jeweils Transportbandstraffungs-Längsverbinder (24) in der Nähe des Transportbands vorgesehen sind; dass der Transportweg mit einem elektrischen Wanderfeldstator (10) ausgerüstet ist; dass die Bewegungselemente (12) jeweils mit in Reihe angeordneten, anziehenden Dauermagneten (16) versehen sind, die mit dem Wanderfeldstator (10) einen synchronen Linearmotor mit einem Luftspalt zwischen den Polflächen der Dauermagnete (16) und dem Wanderfeldstator (10) bilden; und dass die Dauermagnete (16) und der Wanderfeldstator (10) mittels der Rollkörper (14) auf Luftspaltabstand (a) gehalten sind.

2. Transporteinrichtung nach Anspruch 1, dadurch gekennzeichnet, dass die Tragelemente (18) zur Entladung der Transportbandabschnitte (20) insgesamt oder teilweise schwenkbar sind.

3. Tranporteinrichtung nach Anspruch 2, dadurch gekennzeichnet, dass zum Schwenken der Trageelemente (18) in einem Entladebereich des Transportwegs eine Anlauffläche (30) vergesehen ist.

4. Transporteinrichtung nach Anspruch 2 oder 3, dadurch gekennzeichnet, dass die Trageelemente (18) einen im ungeschwenkten Zustand nach oben konkaven Bereich aufweisen und dass ein Teilbereich (26) nach unten schwenkbar ist, um dem Transportband (20) zum Entladen eine zu einer Längskante nach unten geneigte Lage zu geben.

5. Transporteinrichtung nach Anspruch 4, dadurch gekennzeichnet, dass zwischen dem Teilbereich (26) und dem restlichen Trageelement (18) eine Klinke (28) vorgesehen ist und dass in einem Entladebereich des Transportwegs eine Anlauffläche (30) zum Öffnen der Klinke (28) vorgesehen ist.

6. Transporteinrichtung nach Art einer Förderbandeinrichtung zum Transportieren von Gut (G) längs eines Transportwegs, mit
— einem Tranportband (20), auf das das Gut (G) auflagerbar ist;
— laufkatzenartigen, mit Rollkörpern (14) ausgestatteten Bewegungselementen (12), die in Transportweglängsrichtung voneinander beabstandet sind und das Transportband (20) an beabstandeten Stellen tragen; und
— elektrischen Antriebseinrichtungen zum Antreiben der Bewegungselemente (12) längs des Transportwegs, dadurch gekennzeichnet,
dass beiden Längsrändern (32) des Transportbands (20) gesonderte Bewegungselemente (12) zugeordnet sind;
dass der Transportweg mit einem elektrischen Wanderfeldstator (10) ausgerüstet ist;
dass die Bewegungselemente (12) jeweils mit in Reihe angeordneten, anziehenden Dauermagneten (16) versehen sind, die mit dem Wanderfeldstator (10) einen synchronen Linearmotor mit einem Luftspalt zwischen den Polflächen der Dauermagnete (16) und dem Wanderfeldstator (10) bilden; und
dass die Dauermagnete (16) und der Wanderfeldstator (10) mittels der Rollkörper (14) auf Luftspaltabstand (a) gehalten sind.

7. Transporteinrichtung nach Anspruch 6, dadurch gekennzeichnet, dass das Transportband in Bewegungslängsrichtung in mehrere einzelne Transportbandabschnitte (20) unterteilt ist.

8. Transporteinrichtung nach einem der Ansprüche 1 bis 7, dadurch gekennzeichnet, dass die Dauermagnete (16) unterhalb des Wanderfeldstators (10) befindlich an den Bewegungselementen (12) angebracht sind und dass die Rollkörper (14) mindestens zum Teil, vorzugsweise weitgehend, von der Aufnahme von Tragkräften, die vom Transportbandgewicht oder von dem Gut (G) herrühren, entlastet sind.

9. Transporteinrichtung einem der Ansprüche 1 bis 8, dadurch gekennzeichnet, dass mehrere oder alle Bewegungselemente (12) in Transportweglängsrichtung durch Längsverbinder (22) miteinander verbunden sind.

10. Transporteinrichtung nach einem der Ansprüche 1 bis 9, dadurch gekennzeichnet, dass der Transportweg Längs-Profilträger (8) und im Abstand angeordnete Stützen (2) für die Profilträger (8) aufweist, wobei der Wanderfeldstator (10) an den Profilträgern (8) befestigt ist und die Profilträger (8) eine Lauffläche für die Rollkörper (14) darbieten.

11. Transporteinrichtung nach einem der Anprüche 1 bis 10, dadurch gekennzeichnet, dass der Transportweg übereinander oder nebeneinander zwei Bewegungsbahnen für Hin- und Rückführung des Transportbandes (20) bzw. der Transportbandabschnitte (20) aufweist.

12. Transporteinrichtung nach einem der Ansprüche 1 bis 11, dadurch gekennzeichnet, dass für beladene Hinführung und entladene Rückführung des Transportbandes (20) bzw. der Transportbandabschnitte (20) durch unterschiedlichen Abstand zwischen der Rollkörper-Lauffläche am Transportweg und dem Wanderfeldstator (10) ein unterschiedlicher Luftspaltabstand (a) vorgesehen ist.

13. Transporteinrichtung nach einem der Ansprüche 1 bis 12, dadurch gekennzeichnet, dass der Abstand zwischen dem Transportband (20) bzw. den Transportbandabschnitten (20) und dem Linearmotor je nach Beladungszustand des Transportbands (20) federnd änderbar ist und dass Übertragungsglieder (42; 42', 48) zum Umsetzen dieser Abstandsänderung in eine Verlagerung der Rollkörper (14) relativ zu den Dauermagneten (16) und damit in eine Änderung des Luftspaltabstands (a) vorgesehen sind.

14. Transporteinrichtung nach einem der Ansprüche 1 bis 13, dadurch gekennzeichnet, dass die Bewegung des Transportbands (20) oder der Transportbandabschnitte (20) nach dem Selbststeuerungsprinzip gesteuert ist, bei dem der Linearmotorläufer die synchrone Strombeaufschlagung des Linearmotorstators selbst steuert.

15. Transporteinrichtung nach einem der Ansprüche 1 bis 14, dadurch gekennzeichnet, dass der Wanderfeldstator (10) in einzelne Statorabschnitte unterteilt ist, die kürzer als das Transportband (20) oder die Transportbandabschnitte (20) sind.

16. Transporteinrichtung nach einem der Ansprüche 1 bis 5 oder 7 bis 15, gekennzeichnet durch eine derartige Steuerung, dass in unterschiedlichen Bereichen des Transportweges die Transportbandabschnitte mit unterschiedlicher Geschwindigkeit angetrieben werden, vorzugsweise in Belade- oder Entladebereichen oder bei starken Transportwegkrümmungen langsamer als auf längeren, geraden oder schwach gekrümmten Transportwegbereichen.

## Claims

1. A transporting device of the conveyor belt type for transporting material (G) along a transport path, comprising
— a plurality of individual tranporting belt sections (20) adapted to receive thereon the material (G);
— trolley-like moving elements (12) provided with rolling bodies (14) and being spaced from each other in the longitudinal direction of the transport path and carrying the transporting belt sections (20) at spaced locations each; and
— electrical driving means for driving the moving elements (12) along the transport path, characterized in

that carrying elements (18) are provided which are secured to the moving elements (12) and spaced in the longitudinal direction of the transport path and which support the transporting belt sections (20);
that transporting belt tightening longitudinal connectors (24) are provided in the vicinity of the transporting belt between the carrying elements (18) associated with a transporting belt section (20);
that the transport path is equipped with an electrical travelling-wave stator (10);
that the moving elements (12) are each provided with attracting permanent magnets (16) arranged in series and forming with the travelling-wave stator (10) a synchronous linear motor having an air gap between the polce faces of the permanent magnets (16) and the travelling-wave stator (10); and
that the permanent magnets (16) and the travelling-wave stator (10) are held at air-gap spacing (a) by means of the rolling bodies (14).

2. A transporting device according to claim 1, characterized in that the carrying elements (18) are pivotable as a whole or in part for unloading the transporting belt sections (20).

3. A transporting device according to claim 2, characterized in that a contacting face (30) is provided in an unloading area of the transport path for pivoting the carrying elements (18).

4. A transporting device according to claim 2 or 3, characterized in that the carrying elements (18) exhibit an upwardly concave area in an unpivoted state, and in that a partial area (26) may be pivoted downwardly to give the transporting belt (20) for unloading a downwardly sloping position towards a longitudinal edge thereof.

5. A transporting device according to claim 4, characterized in that a catch (28) is provided between the partial area (26) and the remainder of the carrying element (18), and in that a contacting face (30) for opening the catch (28) is provided in an unloading area of the transport path.

6. A transporting device of the conveyor belt type for transporting material (G) along a transport path, comprising
— a transporting belt (20) adapted to receive thereon the material (G);
— trolley-like moving elements (12) provided with rolling bodies (14) and being spaced from each other in the longitudinal direction of the transport path and carrying the transporting belt sections (20) at spaced locations; and
— electrical driving means for driving the moving elements (12) along the transport path, characterized in

that both longitudinal edges (32) of the transporting belt (20) have separate moving elements (12) associated therewith;
that the transport path is equipped with an electrical travelling-wave stator (10);
that the moving elements (12) are each provided with attracting permanent magnets (16) arranged in series and forming with the travelling-wave stator (10) a synchronous linear motor having an air gap between the pole faces of the permanent magnets (16) and the travelling-wave stator (10); and
that the permanent magnets (16) and the travelling-wave stator (10) are held at air-gap spacing (a) by means of the rolling bodies (14).

7. A transporting device according to claim 6, characterized in that ther transporting belt is divided up into a plurality of individual transporting belt sections (20) in the longitudinal direction of movement.

8. A transporting device according to any of claims 1 to 7, characterized in that the permanent magnets (16) are attached to the moving elements (12) at a location below the travelling-wave stator (10), and in that the rolling bodies (14) are at least in part, preferably largely, unloaded from taking up loads resulting from the weight of the transporting belt or from the material (G).

9. A transporting device according to any of claims 1 to 8, characterized in that several or all moving elements (12) are connected to each other by longitudinal connectors (22) in the longitudinal direction of the transport path.

10. A transporting device according to any of claims 1 to 9, charactized in that the transport path exhibits longitudinal structural girders (8) and spaced supports (2) for the structural girders (8), the travelling-wave stator (10) being attached to the structural girders (8) and the structural girders (8) presenting a running surface for the rolling bodies (14).

11. A transporting device according to any of claims 1 to 10, characterized in that the transport path exhibits two tracks of movement for moving the transporting belt (20) or the transporting belt sections (20) in forwand and return direction, said tracks being disposed above or beside one another.

12. A transporting device according to any of claims 1 to 11, characterized in that, for the loaded forward movement and the unloaded return of the transporting belt (20) or the transporting belt sections (20), there is provided a different air-gap spacing (a) by a different distance between the running surface for the rolling bodies on the transport path and the travelling-wave stator (10).

13. A transporting device according to any of claims 1 to 12, characterized in that the distance between the transporting belt (20) or the transporting belt sections (20) and the linear motor is resiliently variable depending on the loaded state of the transporting belt (20), and in that transmitting elements (42; 42', 48) are provided for converting this change of distance into a displacement of the rolling bodies (14) relative to the permanent magnets (16) and thus into a change of the air-gap spacing (a).

14. A transporting device according to any of claims 1 to 13, characterized in that the movement of the transporting belt (20) or the transporting belt sections (20) is controlled according to the automatic control principle, by which the linear motor armature itself controls the synchronous current application on the linear motor stator.

15. A transporting device according to any of claims 1 to 14, characterized in that the travelling-wave stator (10) is divided up into single stator sections which are shorter than the transporting belt (20) or the transporting belt sections (20).

16. A transporting device according to any of claims 1 to 5 or 7 to 15, characterized by such a control that the transporting belt sections are driven at different speeds in different areas of the transport path, preferably slower in loading or unloading areas or at sharp curves in the transport path, than in relatively long, straight or slightly curved areas of the transport path.

**Revendications**

1. Installation de transport à la manière d'un convoyeur à bande destiné à transporter un produit (G) suivant une voie de transport, comportant

— plusieurs sections de bande tranporteuse individuelles (20), sur lequelles on peut placer le produit (G);

— des éléments de déplacement (12) du type chariot roulant, comportant des galets (14), espacés entre eux dans la direction longitudinale de la voie de tranport et portant des sections de bande transporteuse (20) en des emplacements espacés, et

— des dispositifs d'entraînement électriques pour entraîner les éléments de déplacement (12) le long de la voie de tranport,
caractérisée en ce qu'il est prévu des éléments transporteurs (18) fixés aux éléments de déplacement (12), séparés par des intervalles dans la direction longitudinale de la voie de transport, qui supportent les sections de bande transporteuse (20), en ce que des organes de liaison lingitudinaux (24) pour tendre la bande sont prévus entre les éléments porteurs (18) correspondant à une section de bande transporteuse (20) au voisinage de celle-ci, en ce que la voie de transport comporte un stator à champ d'ondes progressives (10), en ce que les éléments de déplacement (12) comportent chacun des aimants permanents attractifs (16) disposés sur une rangée qui constituent avec le stator à champ d'ondes progressives (10) un moteur linéaire synchrone avec un entrefer entre les surfaces polaires des aimants permanents (16) et le stator à champ d'ondes progressives (10), et en ce que l'entrefer (a), entre les aimants permanents (16) et le stator à champ d'ondes progressives (10), est maintenu au moyen des galets (14).

2. Installation de transport selon la revendication 1, caractérisée en ce que les éléments porteurs (18) peuvent basculer totalement ou en partie pour le déchargement des sections de bande transporteuse (20).

3. Installation de transport selon la revendication 2, caractérisée en ce qu'il est prévu une surface de came ascendante (30) pour faire basculer les éléments porteurs (18), dans une zone de déchargement du trajet de transport.

4. Installation de transport selon la revendication 2 ou 3, caractérisée en ce que les éléments porteurs (18) présentent, à l'état non basculé une zone concave vers le haut, et en ce qu'une partie (26) peut pivoter vers le bas, pour donner à la bande transporteuse (20), aux fins de déchargement, une position inclinée vers le bas en direction d'un côté longitudinal.

5. Installation de transport selon la revendication 4, caractérisée en ce qu'il est prévu entre la partie (26) et le reste de l'élément porteur (18), un cliquet (28) et en ce qu'il est prévu dans une zone de déchargement de la voie de transport une surface de came ascendante (30) pour ouvrir le cliquet (28).

6. Installation de transport à la manière d'un convoyeur à bande destiné à transporter un produit (G) suivant une voie de transport, comportant

— une bande transporteuse (20) sur laquelle on peut placer le produit (G);

— des éléments de déplacement (12) du type chariot roulant, comportant des galets (14), qui sont espacés entre eux dans la direction longitudinale de la voie de transport et portent la bande transporteuse (20) en des emplacements espacés, et

— des dispositifs d'entraînement électriques pour entraîner les éléments de déplacement (12) le long de la voie de transport, caractérisée en ce que des éléments de déplacement séparés (12) correspondent aux deux bords longitudinaux (32) de la bande transporteuse (20), en ce que la voie de transport comporte un stator à champ d'ondes progressives (10), en ce que les éléments de déplacement (12) comportent chacun des aimants permanents attractifs (16) disposés sur une rangée qui constituent avec le stator à champ d'ondes progressives (10) un moteur linéaire synchrone avec un entrefer entre les surfaces polaires des aimants permanents (16) et le stator à champ d'ondes progressives (10), et en ce que, l'entrefer (a), entre les aimants permanents (16) et le stator à champ d'ondes progressives (10), est maintenu au moyen des galets (14).

7. Installation de transport selon la revendication 6, caractérisée en ce que la bande transporteuse est subdivisée, dans la direction de déplacement longitudinale, en plusieurs sections de bande individuelles (20).

8. Installation de transport selon l'une des revendications 1 à 7, caractérisée en ce que les aimants permanents (16) sont placés au-dessous du stator à champ d'ondes progressives (10) sur les éléments de déplacement (12), et en ce que les galets (14) sont déchargés au moins en partie, de préférence dans une large mesure, de l'application des forces de support dues au poids de la bande transporteuse ou du produit (G).

9. Installation de transport selon l'une des revendications 1 à 8, caractérisée en ce que plusieurs ou tous les éléments de déplacement (12) sont reliés ensemble dans la direction longitudinale de la voie de transport par des organes de liaison longitudinaux (22).

10. Installation de transport selon l'une des revendications 1 à 9, caractérisée en ce que la voie de transport comporte des poutres profilées longitudinales (8) et des appuis (2) disposés à distance pour les poutres profilées (8), le stator à champ d'ondes progressives (10) étant fixé sur les poutres profilées (8) et les poutres profilées (8) présentant une surface de roulement pour les galets (14).

11. Installation de transport selon l'une des revendications 1 à 10, caractérisée en ce que la voie de transport comporte deux trajets de transport superposés ou contigus pour le guidage des mouvements d'aller et de retour de la bande transporteuse (20) ou des sections de bande de transport (20).

12. Installation de transport selon l'une des revendications 1 à 11, caractérisée en ce que pour le guidage de retour déchargé de la bande transporteuse (20), ou des sections de bande transporteuse (20), il est prévu un entrefer (a) variable grâce à une distance variable entre la surface de roulement des galets sur la voie de transport et le stator à champ d'ondes progressives (10).

13. Installation de transport selon l'une des revendications 1 à 12, caractérisée en ce que la distance entre la bande transporteuse (20), ou les sections de bande transporteuse (20), et le moteur linéaire peut être midifiée élastiquement selon l'ètat de chargement de la bande transporteuse (20) et en ce que des organes de transmission (42, 42', 48) sont prévus pour transformer cette variation de distance en un déplacement des galets (14) par rapport aux aimants permanents (16) et, par suite, en une variation de l'entrefer (a).

14. Installation de transport selon l'une des revendications 1 à 13, caractérisée en ce que le mouvement de la bande transporteuse (20), ou des sections de bande transporteuse (20), est commandé selon le principe de la commande autonome, selon lequel le rotor du moteur linéaire commande lui-même l'alimentation électrique synchrone du stator.

15. Installation de transport selon l'une des revendications 1 à 14, caractérisée en ce que le stator à champ d'ondes progressives (10) est subdivise en sections de stator individuelles qui sont plus courtes que la bande transporteuse (20), ou les sections de bande transporteuse (20).

16. Installation de transport selon l'une des revendications 1 à 5 ou 7 à 15, caractérisée par une commande telle que, dans des zones différentes de la voie de transport, les sections de bande transporteuse sont entraînées à une vitesse différente, de préférence plus lentement dans des zones de chargement ou de déchargement ou pour des courbures prononcées de la voie de transport que sur des zones plus longues de la voie de transport rectilignes ou de faible courbure.

**FIG. 1**

FIG. 3

FIG. 2

FIG. 4

FIG. 5

FIG. 6

FIG. 8

FIG. 7

FIG. 9

FIG. 10

FIG. 11

FIG. 12

FIG. 13

FIG. 14

FIG. 15